## Europäisches Patentamt
## European Patent Office
## Office européen des brevets

(19)

(11) Veröffentlichungsnummer: **0 054 127**
A2

(12)

# EUROPÄISCHE PATENTANMELDUNG

(21) Anmeldenummer: **81108494.6**

(22) Anmeldetag: **19.10.81**

(51) Int. Cl.³: **G 02 B 23/08**

(30) Priorität: **11.12.80 DE 3046663**

(43) Veröffentlichungstag der Anmeldung:
**23.06.82 Patentblatt 82/25**

(84) Benannte Vertragsstaaten:
**CH DE FR GB LI**

(71) Anmelder: **Firma Carl Zeiss**
**Postfach 1369/1380**
**D-7082 Oberkochen(DE)**

(72) Erfinder: **Blaha, Erich**
**Staufenstrasse 15**
**D-7081 Essingen(DE)**

(54) Gelenkoptik.

(57) Gelenkoptiken benötigen zahlreiche Gelenke, wenn eine leichte Bewegbarkeit in allen Richtungen verlangt wird. Bei der beschriebenen Gelenkoptik wird die Zahl der Gelenke dadurch reduziert, daß die Länge von mindestens einem Glied variabel ist. In diesem Teil der Gelenkoptik wird das zu übertragende Bild nach Unendlich abgebildet.

Fig.1

EP 0 054 127 A2

Croydon Printing Company Ltd.

Gelenkoptik

Die Erfindung betrifft eine Gelenkoptik, insbesondere für Operationsmikroskope und Endoskope, zum Anschluß von Mitbeobachtungs- und Dokumentationseinrichtungen bestehend aus Gliedern mit Linsen zur optischen Abbildung und Gelenken mit Spiegeln oder Prismen zur Umlenkung des Strahlenganges.

Bei Operationsmikroskopen und ebenso bei Endoskopen werden häufig Einrichtungen für Mitbeobachtung und Dokumentation (Photo, Film, Fernsehen) benötigt. Aus Gründen der Bildqualität und -gleichheit werden die genannten Einrichtungen üblicherweise über einen Strahlenteiler unmittelbar an das Operationsmikroskop oder Endoskop angeschlossen. Dies hat jedoch den Nachteil, daß bei Änderungen der Beobachtungsrichtung nicht nur das Operationsmikroskop oder Endoskop sondern auch das gesamte genannte Zubehör mitverstellt werden muß. Das ist nur mit erheblichem Kraftaufwand möglich, der insbesondere bei mikrochirurgischen Eingriffen nicht zumutbar ist.

Für Operationsmikroskope ist aus der DE-OS 24 40 958 (US-PA 4 035 057) eine Einrichtung bekannt, bei der das Zubehör für Mitbeobachtung und Dokumentation entweder mit der Aufhängung fest verbunden oder schwenkbar mit dem Mikroskop angeordnet ist. In beiden Fällen kann das Mikroskop nur um eine einzige Achse, die horizontal angeordnet ist, geschwenkt werden. Bei einer Änderung der Beobachtungsrichtung des Mikroskopes ändert sich auch die Einblicksrichtung in das Mikroskop, so daß der Operateur im Extremfall seine Haltung oder Sitzhöhe während des operativen Eingriffes ändern muß, oder aber den Tubus gegen einen mit anderem Einblickswinkel austauschen muß, was während eines operativen Eingriffes kaum durchführbar ist.

Es ist auch bekannt, daß sowohl bei Operationsmikroskopen als auch bei Endoskopen sogenannte Gelenkoptiken eingesetzt werden, um z.B. Drei-Röhren-Farbfernsehkameras verwenden zu können. Derartige Gelenkoptiken bestehen aus Gliedern mit Linsen zur optischen Abbildung, die durch Gelenke verbunden sind, in denen Spiegel oder Prismen zur Umlenkung des Strahlenganges sitzen. Bei einer ausreichenden Zahl von Gelenken kann das Operationsmikroskop oder Endoskop in einem gewissen Bereich beliebig zur feststehenden Mitbeobachtungs- und Dokumentationseinrichtung bewegt werden. Dadurch braucht der Operateur z.B. nur das Mikroskop - und einen Teil der Gelenkoptik - zu bewegen, wenn er seine Beobachtungsrichtung ändern will. In der DE-OS 27 54 614 ist eine derartige Gelenkoptik beschrieben, wobei in diesem Fall in jedem Glied ein zusätzliches Umkehrprisma angeordnet ist, das durch Zahnräder um seine Längsachse drehbar ist, um die Bildlage zu korrigieren, was jedoch für die vorliegende Erfindung ohne Bedeutung ist.

Derartige Gelenkoptiken sind - wenn das Mikroskop bzw. Endoskop in einem gewissen Bereich beliebig bewegbar sein soll - sehr aufwendig, da viele Gelenke erforderlich sind.

Die vorliegende Erfindung hat daher die Aufgabe, eine Gelenkoptik zu schaffen, die mit wenig Gelenken einen großen Manipulationsspielraum zwischen Mikroskop bzw. Endoskop und der feststehenden Mitbeobachtungs- und Dokumentationseinrichtung ermöglicht und sich durch eine leichte Bewegbarkeit in allen Richtungen auszeichnet.

Erfindungsgemäß wird die gestellte Aufgabe dadurch gelöst, daß die Länge von mindestens einem Glied variabel ist. Es ist vorteilhaft die Glieder mit variabler Länge so auszubilden, daß sie auch um ihre Achsen drehbar sind. In den Gliedern mit variabler Länge erfolgt eine Abbildung nach Unendlich. Jedes in seiner Länge veränderbare Glied der Gelenkoptik spart gegenüber einem Aufbau mit Gliedern fester

- 3 -

Länge mindestens ein Gelenk ein.

Weitere vorteilhafte Ausgestaltungen der Erfindung ergeben sich aus den Unteransprüchen.

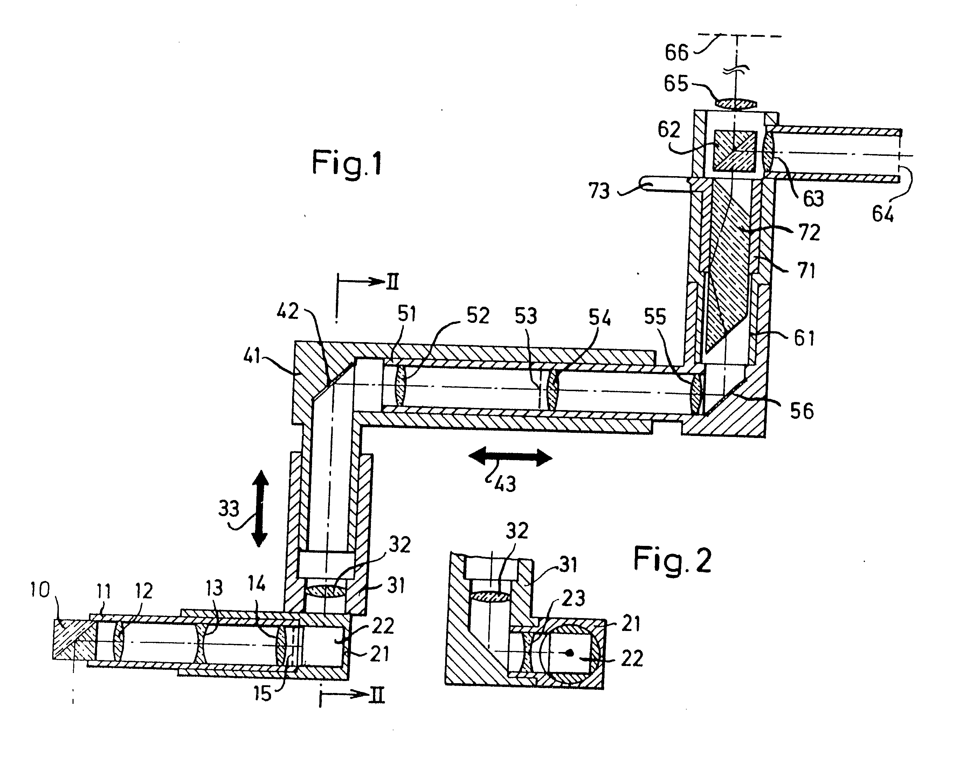

Die Erfindung wird im folgenden anhand eines Ausführungsbeispiels, das in Figur 1 und 2 dargestellt ist, näher erläutert. Im einzelnen zeigen:

Fig. 1    einen Schnitt durch die Gelenkoptik,

Fig. 2    einen Schnitt längs der Linie II Fig. 1.

In Fig. 1 ist mit 10 das Teilerprisma bezeichnet, das im Strahlengang des hier nicht dargestellten Operationsmikroskopes oder Endoskopes sitzt und mit dessen Hilfe ein Strahlengang für die Mitbeobachtungs- und Dokumentationseinrichtung abgezweigt wird. Fest mit dem Operationsmikroskop oder Endoskop verbunden ist das Rohr 11, in dem die Linsen 12, 13 und 14 sitzen. Die Linsen 12 und 13 erzeugen ein reelles Bild, das dem Bild des Operationsmikroskopes oder Endoskopes exakt gleich ist, in der Zwischenbildebene 15. Das Rohr 11 sitzt drehbar in dem Teil 21, das auch in Fig. 2 dargestellt ist. Das Teil 21 enthält einen Umlenkspiegel 22 und eine Linse 23; es ist drehbar in den Teil 31 gelagert. Die im Teil 31 angeordnete Linse 32 bildet zusammen mit der Linse 23 die Zwischenbildebene 15 nach Unendlich ab. Infolge dieser Abbildung nach Unendlich kann das Teil 31 nicht nur um das Teil 41 gedreht werden, sondern es ist auch in Richtung des Pfeiles 33 verschiebbar. Innerhalb des Bereiches der Abbildung nach Unendlich ist im Teil 41 der Spiegel 42 angeordnet, der den Strahlengang um 90° umlenkt. Infolge dieser Umlenkung kann das Teil 41 auch in Richtung des Pfeiles 43 verschoben werden. Die im Anfang des Teiles 51 angeordnete Linse 52 erzeugt in der Ebene 53 ein zweites Zwischenbild. Dieses wird durch die Linse 55 wieder

- 4 -

nach Unendlich abgebildet. Die Linse 54 wirkt ebenso wie die Linse 14 als Feldlinse. Das Teil 51 enthält weiterhin einen Umlenkspiegel 56 und ist selbst drehbar im Teil 61 gelagert. Letzteres ist fest mit der Mitbeobachtungs- und Dokumentationseinrichtung verbunden. Zur Aufspaltung des Strahlenganges für die genannten Einrichtungen dient der Teiler 62. In dem Teil 61 ist drehbar gelagert das Teil 71. Letzteres enthält eine Einrichtung zur optischen Bilddrehung z.B. ein Doveprisma 72. Mit dem Hebel 73 kann es um die optische Achse gedreht werden, so daß das durch die Gelenke gedrehte Bild wieder in seine ursprüngliche oder in eine gewünschte Lage gedreht werden kann. Die Linsen 63 und 65 bilden zusammen mit der Linse 55 die zweite Zwischenbildebene 53 in die Filmebene 66 und in die Bildebene 64 der Mitbeobachtungseinrichtung ab.

Die beschriebene Gelenkoptik läßt sich auch für die Führung von Laserstrahlen verwenden. Dann entfallen die abbildenden optischen Elemente.

Patentansprüche

1. Gelenkoptik, insbesondere für Operationsmikroskope und Endoskope, zum Anschluß von Mitbeobachtungs- und Dokumentationseinrichtungen bestehend aus Gliedern mit Linsen zur optischen Abbildung und Gelenken mit Spiegeln oder Prismen zur Umlenkung des Strahlenganges, dadurch gekennzeichnet, daß die Länge von mindestens einem Glied variabel ist.

2. Gelenkoptik nach Anspruch 1, dadurch gekennzeichnet, daß die Glieder mit variabler Länge um ihre Achsen drehbar sind.

3. Gelenkoptik nach Anspruch 1 oder 2, dadurch gekennzeichnet, daß in den Gliedern mit variabler Länge das zu übertragende Bild nach Unendlich abgebildet ist.

4. Gelenkoptik nach einem der Ansprüche 1 bis 3, dadurch gekennzeichnet, daß durch ein optisches Element die durch die Gelenke bewirkte Bilddrehung kompensierbar ist, bzw. daß das Bild am Ende der Gelenkoptik in eine gewünschte Lage drehbar ist.

5. Gelenkoptik nach Anspruch 4, dadurch gekennzeichnet, das für die Bilddrehung ein Doveprisma vorgesehen ist.

Fig.1

Fig.2

0054127